# EUROPÄISCHE PATENTSCHRIFT

(11) **EP 0 761 793 B1**
(45) Veröffentlichungstag und Bekanntmachung des Hinweises auf die Patenterteilung: **27.11.2002**
(21) Anmeldenummer: 96112916.0
(22) Anmeldetag: 10.08.1996
(51) Int. Cl.: C09J 7/02, A47G 29/00

(54) **Mehrfache Verwendung eines Klebfolien-Laminats**
Multiple use of an adhesive laminate
Usage multiple d'un laminé adhésif

(30) Priorität: 29.08.1995 DE 19531696
(43) Veröffentlichungstag der Anmeldung: 12.03.1997
(73) Patentinhaber: Tesa AG, 20253 Hamburg (DE)
(72) Erfinder: Lühmann, Bernd, Dr., 22846 Norderstedt (DE); Zöllner, Stephan, Dr., 22083 Hamburg (DE); Storbeck, Reinhard, Dr., 22459 Hamburg (DE); Harder, Christian, Dr., 22589 Hamburg (DE)

(56) Entgegenhaltungen:
- WO-A-90/06976
- WO-A-92/11333
- US-A- 4 024 312

## Beschreibung

Die Erfindung betrifft die mehrfache Verwendung eines Klebfolien-Laminats für wiederlösbare Verklebungen, wobei dieses Wiederlösen durch Ziehen an dem Laminat in Richtung der Verklebungsebene erfolgt, sowie dafür geeignete Klebfolien-Laminate.

Klebefolien für wiederlösbare Verklebungen, die durch Ziehen in Richtung der Verklebungsebene wieder lösbar sind, sind bekannt und im Handel unter der Bezeichnung "tesa Power-Strips" erhältlich. Damit hergestellte Verklebungen bieten kraftvollen Halt und lassen sich dennoch spurlos wieder lösen ohne Beschädigung des Untergrundes oder der Fügeteile, wie dies in **DE 33 31 016 C2** beschrieben ist. Auch in **DE 42 33 872 C2** werden derartige Klebfolien zusammen mit einem Haken beschrieben, wobei der Haken selbst durchaus wiederverwendbar ist. Bei allen unbestrittenen Vorteilen dieser Produkte haben diese jedoch den Nachteil, daß die Klebfolien nicht erneut und damit mehrfach verwendet werden können. Bei einem doch recht beachtlichen Preis dieser Klebfolien ist dies ein für den Verbraucher beachtlicher Nachteil.

Auch aus dem sonstigen Stand der Technik lassen sich erneut und damit mehrfach verwendbare derartige Produkte nicht herleiten.

**WO 92/11333** und **WO 93/01979** beschreiben wiederlösbare Klebebänder mit einem Zwischenträger aus einer dehnbaren, aber nicht rückstellenden Folie. Derartige Folien lassen sich zwar durch Zug in Richtung der Verklebungsebene wieder entfernen, doch eine Wiederverwendbarkeit ist in keinem Fall gegeben, da diese Produkte nach dem 'strippen' nicht wieder in ihren ursprünglichen Zustand zurückrelaxieren können. **WO 92/11332** beschreibt zwar wiederlösbare Klebebänder, die auch dehnbare, rückstellende Folien als Zwischenträger nutzen, jedoch werden ausschließlich photopolymerisierte Acrylathaftkleber verwendet, die derartigen Produkten Nachteile verleihen, die sich in der Praxis recht störend auswirken. Eine reproduzierbare Vernetzung der Haftklebemasse ist schwierig zu erreichen, was entsprechende Schwankungen der Produkteigenschaften zur Folge hat. Zudem verbleibt ein unvermeidlicher Restgehalt an Photoinitiator, der insbesondere bei späterer Verklebung unter Sonnenlichteinwirkung, etwa an Fensterscheiben, zu deutlichen Veränderungen der Kleberschicht führt, zu Nachvernetzung, Vergilbung und Verlackung, so daß ein rückstandsfreies Abstrippen nicht mehr erreicht wird. Auch ein unvermeidbarer Restmonomergehalt (mindestens 1%) ist gesundheitsbedenklich, insbesondere bei Innenanwendungen. Ebenso können Folgeprodukte des Photoinitiators, insbesondere Benzoesäuremethylester, zu Migration und Veränderung der Produkteigenschaften führen. Die Reaktionswärme, die während einer flächigen UV-Polymerisation von Acrylaten frei wird, kann den Träger schädigen oder verwellen. Ein Compoundieren mit z.B. Harzen ist nur sehr eingeschränkt möglich, da diese die UV-Polymerisation stören. Und nachteilig ist auch das zwangsläufig erhaltene Vernetzungsprofil der Klebemasse: Üblicherweise wird die UV-Polymerisation durch masseseitige UV-Bestrahlung durchgeführt. Dadurch erhält man Kleberschichten mit einer höheren Vernetzung an der Kleberoberfläche als zum Träger hin. Folge ist ein verringerter Tack und eine schlechte Masseverankerung. Wenn durch den Träger UV-bestrahlt wird, was sowohl einen besseren Tack, bessere Adhäsion und Masseverankerung bewirkt, muß der Träger UV-durchlässig sein. Viele Träger und viele SBS/SIS Block Copolymere sind aber nicht besonders gut UV-durchlässig oder werden durch UV-Licht geschädigt.

Insgesamt sind die Produkteigenschaften damit so, daß ein längeres Verkleben in gleichbleibender Qualität nicht gewährleistet ist, und insbesondere kein rückstandsfreies Abstrippen, wie dies in WO 92/11332 auf S. 19, Tabelle 2, Spalte 6 auch belegt wird, indem dort Masserückstände an den Verklebungsrändern verbleiben (Fußnote a), wenn die Produkte nicht ohnehin reißen (Fußnote b). Mehrfach verwendbare Produkte werden damit weder beschrieben noch nahegelegt.

Weiterhin beschreibt **US 4.024.312** hochverstreckbare Klebfolien, welche einen Träger aus hochelastischen, thermoplastisch verarbeitbaren Styrolblockcopolymeren vom Typ A-B-A (mit A - Poly(styrol), B = Poly(isopren), Poly(butadien) oder deren Hydrierungsprodukte) besitzen. Dem Träger können optional mit den Blockpolystyroldomänen mischbare Harze, vorzugsweise in einer Menge von 85 bis 200 Tln pro 100 Tle Elastomer, zugegeben sein. Der Träger ist wenigstens einseitig mit einer Haftklebemasse beschichtet. Die elastische Verformung der Klebebänder beträgt mindestens 200%, der Modul bei 50% Dehnung ist < 13,8 MPa (2000 lbs/inch2). Die elastische Rückverformung nach Verstreckung um 50% beträgt wenigstens 75%. Die Haftklebemassen nutzen entweder Polyisopren (z.B. Naturkautschuk) oder die auch für das Trägermaterial eingesetzten Synthesekautschuke auf Styrolblockpolymerbasis in Abmischung mit Klebharzen und ggf. weiteren Abmischkomponenten. Klebebänder können leicht durch Verstreckung parallel zur Verklebungsfläche vom Haftgrund entfernt werden. Solche Selbstklebebänder haben infolge der Migrierfähigkeit der niedermolekularen Bestanteile (Harze, Weichmacher) zwischen Haftklebemasse und Träger keine konstanten Produkteigenschaften: Mechanischen Festigkeiten des Trägers und Eigenschaften der verwendeten Haftklebemassen werden durch die Diffusion der Harze irreversibel verändert. Eine gezielte Einstellung und Steuerung der Produkteigenschaften, wie für technische Verklebungen essentiell, ist damit nicht möglich. Eine mehrfache Verwendung ist nicht möglich, da die mit Kautschukkleber beschichteten Trägermaterialien beim Verstrecken parallel zur Verklebungsfläche und sofort nach dem Ablösen vom Haftgrund zurück schnellen und derartig stark kleberseitig verbacken, sodaß diese Kautschukbeschichtungen nicht voneinander lösbar sind. Mehrfach verwendbare Produkte werden daher weder beschrieben noch nahegelegt.

Aufgabe der Erfindung war es, hier Abhilfe zu schaffen, insbesondere die mehrfache Verwendung eines Klebfolien-Laminats zu ermöglichen.

Demgemäß betrifft die Erfindung die mehrfache Verwendung eines Klebfolien-Laminats, wie dies in den Ansprüchen näher gekennzeichnet ist.

Elastische Träger sind insbesondere Elastomere mit einem Rückstellvermögen von > 50%, bevorzugt mit einem Rückstellvermögen > 80%: Während des Ablösevorgangs der verklebten Produkte treten durchschnittlich Dehnungen von 100 bis 400% auf. Es können aber auch Werte von bis zu 1500% auftreten. Die auftretende Dehnung ist dabei im wesentlichen vom Zug-Dehnungsverhalten des eingesetzten Elastomertyps, der Dicke des Trägers und von der erreichten Verklebungsfestigkeit der Klebfolien abhängig.

In jedem Fall muß für ein rückstandsfreies Wiederablösen vom Untergrund bzw. aus der Klebfuge gelten, daß die Reißfestigkeit der Klebfolie höher als deren Ablösekraft (Stripkraft) ist. Bevorzugt liegt das Verhältnis Reißkraft zu Stripkraft bei > 1,5, besonders bevorzugt bei > 2,5.

Die Reißfestigkeit der hier beschriebenen Klebfolien wird insbesondere von Art und Dicke der verwendeten Trägerfolien bestimmt. Für Träger auf Basis von Styrolblockcopolymeren mit linearer Dreiblockstruktur und Blockpolystyrolgehalten von ca 15 bis 40 Gew.% beträgt die minimale Trägerdicke für doppelseitig haftklebrige Klebfolien bei Klebkräften von > ca 5 N/cm etwa 50 µm (siehe Beispiele). Unterhalb dieser Grenze ist die Reißfestigkeit üblicherweise zu gering für ein rückstandsfreies Wiederablösen. Für Haftgründe mit hoher Adhäsion gegenüber den eingesetzten Klebestoff-Folien (hohe Klebkräfte) erhöht sich die minimal nötige Trägerdicke entsprechend.

### Bevorzugte Elastomere sind:

### 1. Styrolblockcopolymere

Geeignet sind Styrol-Isopren- und Styrol-Butadien-Blockcopolymere sowie deren Hydrierungsprodukte Styrol-Ethylen/Butylen- und Styrol-Ethylen/Propylen-Blockcopolymere. Erfindungsgemäße Blockcopolymere können lineare SES (S bezeichnet den Polystyrolblock, E den Elastomerblock) Dreiblockpolymere aber auch radiale und sternförmige (SE)ₓ Blockcopolymere (x bezeichnet die n-funktionelle Kopplungskomponente) mit n ≥ 3 und lineare (SE)ₙ-Blockpolymere sein.

Typische Blockpolystyrolgehalte liegen im Bereich von ca. 8 bis 50 Gew.%, bevorzugt zwischen ca. 15 und 45 Gew.%. Der SE-Zweiblockgehalt ist bevorzugt zu < 50% zu wählen.
- 2.: Naturkautschuk
- 3.: Polyisopren
- 4.: Polybutadien
- 5.: Polychloropren-Kautschuk
- 6.: Butylkautschuk
- 7.: Silikonkautschuk
- 8.: EPDM-Kautschuk oder Ethylen-Propylen-Copolymere
- 9.: Polyurethane (z.B. Walopur 2201/Wolff Walsrode, Platilon UO 1/Atochem, Desmopan/Bayer, Elastollan/Elastogran)
- 10.: Vinyl-Copolymere
- 10 a.: Ethylen-Vinylacetat-Copolymere (z.B. Fa. M & W: 524.060, Fa. Exxon, Exxtraflex Film)
- 10 b.: Vinylchlorid-Acrylat-Copolymere
- 11.: Polyetherester (z.B. Arnitel/Akzo, Hytrel/Du Pont)
- 12.: Polyether- und esteramide (z.B. Pebax/Atochem, Grilon/Ems-Chemie)
- 13.: Polycarbonat-Polyester-Copolymere
- 14.: Ethylen-Acrylat-Copolymere
- 15.: ABS-Copolymere

Weiterhin können die vorgenannten Elastomere auch als Bestandteil in Polymerblends eingesetzt werden. Zur Einstellung der mechanischen Eigenschaften kann eine Vernetzung vorgenannter Materialien vorteilhaft sein.

### Geeignete Acrylat-Haftkleber incl. Abmischkomponenten (Klebharze, Füllstoffe, Pigmente) sind:

- lösungsmittelhaltige und -freie Acrylatklebemassen:
   Copolymerisate auf Basis Acrylsäure / Methacrylsäure und deren Ester mit C1 bis C25-Atomen, Malein-, Fumar-, Itaconsäure und deren Ester, substituierte (Meth)acrylamide; weitere Vinylverbindungen, wie z.B. Vinylester, Vinylacetat, Vinylalkohol und/oder deren Ester
- Compounds aus Acrylatcopolymerisaten und Harzen, wie z.B. Foral 85 E
- Compounds aus verschiedenen Acrylatcopolymerisaten
- Compounds aus Acrylatcopolymerisaten und weiteren polymeren Abmischkomponenten
- Optional sind Additive in Form von anorganischen und organischen Materialien, wie z.B. Glaskugeln, -fasern, Pigmenten, Alterungsschutzmittel, Ruß, Titandioxyd erfindungsgemäß zu verwenden.

Die verwendeten Acrylatcopolymere werden zur Erzeugung einer ausreichenden Kohäsion üblicherweise vernetzt. Für die Erreichung einer über die Schichtstärke gleichmäßigen Vernetzungsdichte sind thermisch initiierte Vernetzungsverfahren, z. B. die Vernetzung über Metallchelate geeignet. Ein sehr homogenes Vernetzungsprofil läßt sich auch mittels ES-Bestrahlung erreichen. Steuergröße für das Vernetzungsdichteprofil ist die Beschleunigerspannung der Elektronenstrahlquelle. In Abhängigkeit vom Flächengewicht der zu durchstrahlenden Klebefolie kann dabei eine einseitige Bestrahlung (vorzugsweise bei niedrigen Flächengewichten, aber auch bei hohen Flächengewichten, wenn eine ausreichend hohe Beschleunigerspannung zur Verfügung steht) oder eine beidseitige ES-Bestrahlung (vorzugsweise bei hohen Flächengewichten und niedrigen Beschleunigerspannungen) zur Einstellung einer homogenen Vernetzungsdichte gewählt werden.

Dispersionsacrylate verfügen infolge ihrer hohen Molmasse üblicherweise über eine für die hier beschriebenen Anwendungen ausreichende Kohäsion, so daß im Allgemeinen keine zusätzliche Vernetzung mehr nötig ist.

Zur Verbesserung der Verankerung der Haftklebemassen auf dem Zwischenträger kann letzterer einer physikalischen und/oder chemischen Vorbehandlung (Primerung) unterzogen werden. Geeignete Vorbehandlungsmethoden sind z.B. die Corona-, die Flamm-, die Plasmavorbehandlung sowie die Fluorvorbehandlung.

Die erfindungsgemäß verwendeten Produkte zeigen eine Reihe von Vorteilen gegenüber dem Stand der Technik.

Gegenüber Naturkautschuk- und synthesekautschukbasierenden Haftklebern mit olefinischen Doppelbindungen (DE 3.331.016, US 4.024.312 u.a.):
- die hohe Alterungsbeständigkeit, d.h. insbesondere kein Verlust oder Anstieg der Parameter Anfaßklebrigkeit, Klebkraft und Scherfestigkeit nach Alterung, auch nach starker Sonnenlicht- oder Ozonexposition.
- höchste Transparenz bei geringster Eigenfarbe: Es lassen sich wasserklar transparente Systeme realisieren.

Gegenüber Dreischichtlaminaten mit Synthesekautschukhaftkleber auf Basis von Styrolblockpolymeren (US 4.024.312 u.a.):
- bei Abwesenheit von niedermolekularen Klebmassebestandteilen besteht nicht die Gefahr der Migration selbiger zwischen den Laminatschichten der Klebefolien und in die Oberfläche der Verklebungspartner.

Gegenüber Einschichtlaminaten und gegenüber Systemen mit nicht elastischen Zwischenträgern (DE 3.331.016, WO 92/11333 u.a.):
- getrennte Steuerung von Adhäsion und Reißfestigkeit, da die Adhäsion primär über die äußeren Klebebandschichten, die Reißfestigkeit über die innenliegende Mittelschicht gesteuert werden kann.
- Breite Einstellbarkeit der Lösekräfte (Stripkräfte) beim rückstandsfreien Ablösen infolge der hohen Variabilität der Elastizitätsmoduln der zur Verfügung stehenden elastischen Mittelschichten (Trägerfolien).

Gegenüber UV-Polymerisaten / UV-vernetzten Haftklebemassen (WO 92/11332):
- Keine Gefahr der Nachvernetzung, insbesondere nach Sonnenlichtbestrahlung durch Restgehalte an UV-Initiatoren. Keine Restgehalte an toxikologisch bedenklichen Bestandteilen, wie sie in UV-polymerisierten resp. vernetzten Systemen üblicherweise eingesetzt werden.
- Leichte Realisierbarkeit von spezifisch eingefärbten Haftklebemassen.
- Möglichkeit der Einarbeitung von Füllstoffen in die Haftklebemassen.
- Möglichkeit der Verwendung von Gemischen bereits polymerisierter Copolymere.

### Allgemein:

- Leichte Herstellbarkeit im Produktionsprozeß, da mit den üblichen Beschichtungsverfahren realisierbar.
- Elastische Zwischenträger mit einer elastischen Rückverformung von vorzugsweise > ca. 90% können bei Verwendung von ausreichend alterungsbeständigen Haftklebemassen mehrfach verwendet werden, da die Schichtdicke, welche wesentlich die Produktqualität (Anfaßklebrigkeit, Klebkraft, Scherfestigkeit) bestimmt, bei einer weitgehenden Rückverformung wieder auf ihre ursprüngliche Größe zurückgeht. Im Gegensatz zu kautschukbasierenden Haftklebemassen sind die autoadhäsiven Eigenschaften von Acrylatcopolymeren leicht derart einzustellen, daß die Kleber auch nach Kontakt leicht voneinander zu entfernen sind.
- Zudem lassen sich die erfindungsgemäß eingesetzten Acrylatmassen, da sie aus der Lösung, Schmelze oder Dispersion aufgetragen werden, hervorragend auf visco-elastischen Trägern verankern. Daneben haben die Massen kein UV-Massen typisches Vernetzungsprofil. Die Vernetzungsdichte ist gleichmäßig in der gesamten Klebeschicht. Diese besonders gute Verankerung der Produkte wird durch Verklebungstests auf Stahl sowie durch vergebliche Delaminierungsversuche nachgewiesen werden. Die Produkte hinterlassen im Gegensatz zu UV-polymerisierten Produkten keine Klebemasserückstände auf Substraten wie Stahl und die Verankerung kann durch Vorbehandlung des Trägers (Corona, Flammvorbehandlung, Plasma, Primer) noch weiter verbessert werden.

Im folgenden soll die Erfindung anhand von Ausführungsbeispielen erläutert werden, ohne diese aber damit unnötig einschränken zu wollen.

### Ausführungsbeispiele

### Herstellung der Haftklebemassen

### Beispiele 1 u. 2:

Die folgenden Monomergemische (Mengenangaben in Gew.%) wurden in Lösung copolymerisiert. Die Polymeransätze bestanden aus 60 Gew.% der Monomerengemische sowie 40 Gew.% Lösungsmittel.

Die Lösungen wurden in üblichen Reaktionsgefäßen aus Glas oder Stahl (mit Rückflußkühler, Rührer, Temperatursteuermeßeinheit und Gaseinleitungsrohr) zunächst durch Spülen mit Stickstoff von Sauerstoff befreit und dann zum Sieden erwärmt. Durch Zusatz eines für die radikalische Polymerisation handelsüblichen Initiators (Vazo 67 (Akzo)) wurde die Polymerisation ausgelöst. Während der Polymerisationszeit von etwa 20 Stunden wurde je nach Viskosität ggf. mehrmals mit weiterem Lösungsmittel verdünnt, so daß die fertigen Polymerlösungen Feststoffgehalte von 35 bis 55 Gew.% aufwiesen.

### Beispiel 1: Monomermischung (Gew.%):

2-Ethylhexylacrylat/Butylacrylat/ N-tert.Butylacrylamid/ Acrylsäure/ Maleinsäureanhydrid = 39,25/ 39,25/ 20/ 0,5/ 1

### Beispiel 2: Monomermischung (Gew.%):

Butylacrylal/ Isooctylacrylal/ Glycidylmethacrylat/ Acrylsäure = 49/ 49/ 1/ 1

Die so hergestellten Polymerisate können bei Bedarf gemäß der aufgeführten Compoundierungsmöglichkeiten entsprechend weiter abgemischt werden. Dieser Compoundierungsschritt kann wie auch der Verarbeitungs-/Beschichtungsschritt ggf. aus Lösung oder im aufkonzentrierten Zustand erfolgen.

Die Haftklebeeigenschaften der auf diese Weise hergestellten Massen lassen sich über eine Vernetzung (z.B. chemische bzw. Bestrahlung mit schnellen Elektronen) gezielt auf die Anforderungen des Endproduktes hin einstellen.

### Ausführungsbeispiele II:

### Testmethoden, Musterherstellung, Anwendungsbeispiele

### Testmethoden:

### Höchstzugkraft, Reißdehnung

Die Messungen erfolgen in Anlehnung an die DIN 53455 und DIN 53815. Die Zuggeschwindigkeit beträgt 200 mm/min.

### Prüfung auf Stripfähigkeit (Praxisverklebung)

Getestet werden Klebfolienstreifen der Abmessung 50 mm * 20 mm (Länge * Breite), welche an einem Ende beidseitig einen nicht haftklebrigen Anfasserbereich der Abmessung 9 mm * 20 mm tragen. Der Anfasserbereich wird durch beidseitiges Aufkaschieren von 12 µm starker PETP-Folie auf den Klebfolienstreifen erhalten. Die haftklebrigen Bereiche der Klebfolienstreifen sind beidseitig mit silikonisiertem Trennpapier abgedeckt. Von den 24 h unter Normalklima (T = + 23° C, 50% rel. Feuchte) gelagerten Klebfolienstreifen wird ein Trennpapier entfernt und der Klebfolienstreifen derart auf eine rechteckige Resopalplatte der Abmessungen 100 x 100 mm verklebt (durch zweifaches Überrollen mit einer 2 kg Stahlrolle), daß der Anfasser ca 7 mm über eine Seite der Resopalplatte herausragt. Hiernach wird nach Entfernen des 2. Trennpapieres eine Platte aus Hartpappe identischen Abmaßes deckungsgleich zur Resopalplatte auf die Rückseite des Klebfolienstreifens verklebt (5 sec Andruck mit 100 N). Die Anfasserfolie ragt jetzt ca. 2 mm in die Klebefuge hinein. Entsprechende Probekörper werden 48 h bei Normalklima gelagert. Beurteilt wird die Anzahl der Klebfolienstücke, welche beim Lösen der Verklebung reißen. Zum Lösen der Verklebung werden die Klebestreifen von Hand, ausgehend vom Anfasser, parallel zur Verklebungsebene aus der Klebefuge herausgelöst (gestrippt). Die Lösegeschwindigkeit beträgt ca 25-100 mm/sec.

### Stripkraft

Getestet werden Klebfolienstreifen der Abmessung 40 mm * 20 mm (Länge * Breite), welche an einem Ende einen nicht haftklebrigen Anfasser der Abmessung 9 mm * 20 mm tragen. Der Anfasserbereich wird durch beidseitiges Aufkaschieren von 12 µm starker PETP-Folie auf die Klebfolienstreifen erhalten. Die 24 h unter Normalklima (T = + 23° C, 50% rel. Feuchte) gelagerten Klebfolienstreifen werden derart auf eine rechteckige Polymethylmethacrylat-Platte der Abmessung 5 cm * 10 cm * 0,3 cm (Breite * Länge * Dicke) durch zweifaches Überrollen (Überrollgeschwindigkeit 10m/min) mit einer 2 kg Stahlrolle verklebt, daß der Anfasser 7 mm über die kurze Seite der PMMA-Platte hinausragt. Die PMMA-Platte wird in die untere Klemmbacke eines Dynamometers eingespannt, der Klebfolienanfasser in dessen oberer Klemmbacke befestigt. Mit einer konstanten Separationsgeschwindigkeit von 150 mm/min wird das Klebfolienstück, nahezu parallel zur Verklebungsebene der PMMA-Platte, in einem Abzugswinkel von 2° bis 3°, abgelöst (gestrippt). Dabei wird die erforderliche Abzugskraft (Stripkraft) [N/cm] gemessen. Zur Beurteilung der Wiederverwendbarkeit der Klebfolienstreifen wird nach dem 1. Separationsvorgang der beschriebene Ablösevorgang nach Rückstellung des Klebfolienstreifens und erneuter Verklebung desselben wiederholt.

### UV-Beständigkeit

Klebfolienstreifen der Abmessung 40 mm * 20 mm (Länge * Breite) werden einseitig derart auf rechteckige Polyethylen (PE)-Platten der Abmessungen 100 mm x 150 mm verklebt, daß ein Anfasser mit den Abmessungen 10 mm * 20 mm über eine Kante der PE-Platte übersteht. Der Anfasserbereich wird durch beidseitiges Aufkaschieren von 12 mm starker PETP-Folie auf den Klebfolienstreifen erhalten. Es erfolgt eine mindestens dreiminütige Bestrahlung der Proben mit UV-Licht (Leistung ca. 120 Watt/cm, Lampentyp: UV-H; Fa. Eltosch; Probenabstand = 10 cm). Danach wird manuell geprüft, ob sich die Klebfolienstreifen vom PE-Haftgrund durch Ziehen nahezu parallel zur Verklebungsfläche rückstands- und reißerfrei ablösen lassen. Zusätzlich erfolgt eine vergleichende qualitative Beurteilung der Anfaßklebrigkeit (Fingertack) vor und nach UV-Exposition.

### Ozon-Beständigkeit / Scherfestigkeit

Getestet werden Klebfolienstreifen der Abmessung 40 mm *20 mm (Länge * Breite). Ein derartiges Klebfolienstück wird zwischen 2 sich überlappende Stahlplatten der Abmessungen 50 mm x 30 mm verklebt (Überlappungsfläche = beidseitige Verklebungsfläche: 20 mm * 20 mm). Die so verklebten Stahlplatten werden einer Scherbelastung von 5 N ausgesetzt. Es erfolgt eine sechstägige Lagerung der verklebten Musterstreifen unter mit Ozon angereicherter Luft (Ozongehalt = 250 ppb, Temperatur = 40° C). Soweit die Probe nicht vorher abgeschert ist, wird der Test nach 6 Tagen abgebrochen und die Probekörper beurteilt. Dabei wird manuell geprüft, ob sich die Klebfolienstreifen von den Stahlplatten, parallel zur Verklebungsfläche, in Längsrichtung der Klebestreifen ablösen lassen. Die Lösegeschwindigkeit beträgt ca. 25 - 100 mm/sec.
Beurteilt wird, ob sich die Klebfolienstreifen rückstands- und reißerfrei vom Stahlhaftgrund lösen. Zusätzlich erfolgt eine qualitative Beurteilung der Oberfläche sowie der Anfaßklebrigkeit (Fingertack) vor und nach Ozonexposition.
Weiterhin erfolgt ein Vergleich der Ozon-Beständigkeit zwischen den Musterstreifen (Beispiel 1 - 6) und Mustern wie sie in DE 33 31 016 C 2 beschrieben werden.

### Restmonomergehalt

Die analytische Bestimmung des Restmonomergehaltes erfolgt durch Flüssigextraktion der verwendeten Haftklebemassen und anschließender Kapillargaschromatographie. Im Vordergrund der analytischen Untersuchungen stehen insbesondere dickere Klebmasseschichten, wie sie vorzugsweise durch Schmelzhaftkleberbeschichtungen zu erhalten sind.

### Lichtdurchlässigkeit

Alle eingesetzten Trägermaterialien wurden auf spezifische Absorptionsbanden im Bereich des sichtbaren Lichtes untersucht. Hierzu wurde neben einem visuellen Vergleich die Transmission mit einem Photometer (Typ: Dr. Lange, Lico 200) im Wellenlängenbereich von 400 bis 800 nm quantitativ erfaßt.

### Herstellung der Proben (Musterbeispiele 1-6)

Die Zwischenträger der Beispiele 1a - 1c und 2a wurden als Gießfolien aus Toluol erhalten. Der Zwischenträger aus Beispiel 5 wurde von der Fa. Wolff Walsrode bezogen. Die übrigen Folien sind durch Schmelzpressung von Granulat im Temperaturbereich von T = 140-180° C hergestellt. Vor Beschichtung mit Haftklebemassen wurden alle Folien einer beidseitigen Coronabehandlung unterzogen.

Die Beschichtung der Zwischenträger mit Haftkleber erfolgte beidseitig mit jeweils identischem Klebmasseauftrag. Die Beschichtung erfolgte in den aufgeführten Beispielen indirekt im Transferverfahren, sie kann jedoch auch direkt erfolgen. Die hergestellten Klebfolienlaminate wurden mit einem Druck von 6 bis 7 bar zusammenkaschiert. Abschließend wurden die Haftklebemassen durch eine beidseitige Bestrahlung mit schnellen Elektronen (ES-Bestrahlung) oder chemisch (Tempern) vernetzt.

Die mechanischen Daten der einzelnen Muster sind der Tabelle 1 zu entnehmen. Sämtliche Muster lassen sich ohne zu zerreißen rückstandsfrei aus Resopal- /Hartpappe-Fugen durch strippen herauslösen (siehe Testmethode: "Prüfung auf Stripfähigkeit").

### Typische Anwendungsbereiche für die hier vorgestellten Klebfolienlaminate sind:

1. Befestigung und Aufhängen von Wandhaken, Bildern, Postern, Schildern.
2. Zusammenfügen von Gegenständen, die zu einem späteren Zeitpunkt getrennt werden sollen (z.B. Behälter für einen Transport fixieren).
3. Verschließen von Öffnungen (aufziehbare Öffnungslaschen, Getränkeverschlüsse).
4. Wiederverwendbare, entfernbare Beschriftungsetiketten.

### Beispiel 1a - 1c

Als Material für den Zwischenträger wird Vector 4461 D (Fa. Exxon) eingesetzt. Als Haftklebeschicht findet einmal ein Acrylatcopolymerisat (s.o. Herstellung der Haftklebemasse, Bsp. 1) in einer Schichtdicke von ca. 600 mm Verwendung (Beispiel 1a). Weiterhin wurde eine Acrylathaftklebemasse (s.o. Herstellung der Haftklebemasse, Bsp. 2) mit einer Schichtdicke von ca. 50 mm eingesetzt. Diese wird in Beispiel 1b durch ES-Bestrahlung, in Beispiel 1c durch Zugabe einen Vernetzungsmittels, vernetzt.
Klebfolienstreifen 1a und 1b/1c zeichnen sich durch ihr unterschiedliches spezifisches Aufziehverhalten (Klebkraftanstieg nach Verklebung) gegenüber rauhen oder glatten Untergründen aus. Der Klebfolienstreifen 1a ist dabei aufgrund seines hohen Masseauftrags dabei insbesondere für die Verklebung auf rauhen Untergründe geeignet, 1b/1c sind dagegen bevorzugt auf glatten Untergründen einsetzbar. Die beschriebenen Muster lassen sich sehr gut durch Strippen aus einer Resopal-Hartpappe-Klebfuge herauslösen. Reißer beim Lösen der verklebten Folienstreifen oder verbleibende Rückstände auf den beiden Untergründen traten bei langsamem Herauslösen aus Resopal- Hartpappe-Klebfugen nicht auf. Bei sehr hohen Ablösegeschwindigkeiten kann infolge der im Vergleich zur Stripkraft niedrigen Reißfestigkeit ein Reißen der Klebstoff-Folien auftreten.

### Beispiel 2a/2b

Als Material für den Zwischenträger wurde Cariflex TR 1101 (Fa. Shell) eingesetzt. Als Haftklebemasse wurde ein Acrylatcopolymerisat (s.o. Herstellung der Haftklebemasse, Bsp. 1) verwendet. Die eingesetzten Schichtdicken der Haftklebemassen lagen bei 630 µm (Beispiel 2a) und bei 60 µm (Beispiel 2b).
Muster der Beispiele 2a/2b zeichnen sich durch eine besonders gute Wiederverwendbarkeit aus. Abbildung 1 stellt diesen Zusammenhang graphisch dar: Aufgetragen ist die zum Lösen der Verklebung erforderlich Stripkraft [N/cm], die zum Ablösen von Muster 2b nötig ist, als Funktion der Anzahl der mit selbigem Muster vorgenommenen Verklebungen aufgetragen. Nach dem ersten Löseprozeß ist nur ein sehr geringer Abfall der erforderlichen Stripkraft bei weiterer Verwendung zu beobachten.

### Beispiel 3a/3b

Als Material für den Zwischenträger wurde Stereon 841 A (Fa. Firestone) eingesetzt. Als Haftklebemasse wurde für Beispiel 3a ein Acrylatcopolymerisat (s.o. Herstellung der Haftklebemasse, Bsp. 1) verwendet. Für Beispiel 3b wurde diese Masse mit einem Kolophioniumharz abgemischt (20% Foral 85 E/Hercules GmbH).
Im Gegensatz zu UV-Polymerisaten ist eine Compoundierung mit Harzen bei diesen Massesystemen problemlos durchzuführen. Damit hat man eine einfache Möglichkeit zur Anpassung der Haftklebeeigenschaften für ausgewählte Massesysteme.

### Beispiel 4

Als Material für den Zwischenträger wurde Kraton G 1657 X (Fa. Shell) eingesetzt. Als Haftklebemasse wurde ein Acrylatcopolymerisat (s.o. Herstellung der Haftklebemasse, Bsp. 1) verwendet. Diese Klebemasse wurde ebenfalls mit einem Harz abgemischt (Foral 85 E/ Hercules GmbH).
Die Compoundierung mit Harz erlaubt auch hier eine sehr spezifische Einstellung von Klebkraft und Scherfestigkeit.

### Beispiel 5

Als Material für den Zwischenträger wurde Walopur 2201 (Fa. Wolff Walsrode) eingesetzt. Als Haftklebemasse wurde ein Acrylatcopolymerisat (s.o. Herstellung der Haftklebemasse, Bsp. 1) verwendet. Die Masse wurde durch Zusatz von 0,5 Gew.% PV-Gelb GR 03 (Fa. Hoechst AG) eingefärbt.
Mit geringen Pigment- oder Farbstoffzusätzen können farbige Klebfolienstreifen in vielfältigen Farbvariationen realisiert werden.

### Beispiel 6

Als Material für den Zwischenträger wurde Vector 4111 D (Fa. Exxon) eingesetzt. Als Haftklebemasse wurde ein Acrylatcopolymerisat (s.o. Herstellung der Haftklebemasse, Bsp. 1) verwendet. Muster aus Beispiel 6 sind durch besonders niedrige Stripkräfte und damit durch eine angenehme Handhabung gekennzeichnet.

### Allgemeine Eigenschaften der Beispiele 1-6

### UV-Beständigkeit

Alle verklebten Musterproben ließen sich nach UV-Bestrahlung problemlos von PE-Platten durch Abstrippen entfernen. Es traten keine Masserückstände auf. Im Gegensatz zu Systemen auf Basis von Synthesekautschuk/Harz, wie sie z. B. in DE 33 31 016 C 2 beschrieben werden, ist nach vergleichbarer UV-Exposition eine deutlich stärkere Restanfaßklebrigkeit vorhanden. Die Muster sind dadurch besonders für Verklebungen auf Glas und anderen transparenten UV-durchlässigen Substraten geeignet.

### Ozon-Beständigkeit

Alle verklebten Musterproben ließen sich nach Exposition unter Ozonatmosphäre nach 6 Tagen problemlos von Stahlplatten durch Abstrippen entfernen. Die Musterproben zeigten eine ausgezeichnete Beständigkeit gegenüber Ozon. Im Gegensatz zu reinen Systemen auf Basis von Synthesekautschuk/Harz, wie sie z. B. in DE 33 31 016 C 2 beschrieben werden, zeigten die mit Acrylatcopolymerisaten umhüllten Trägermaterialien aus Synthesekautschuk keine Schädigung der Oberfläche durch Ozonrißbildung und wiesen vergleichbare mechanische Eigenschaften (Reißfestigkeit, Höchstzugkraft) wie vor der Ozonlagerung auf.
Im Vergleich zu Systemen auf Basis von Synthesekautschuk/Harz, ist nach vergleichbarer Ozon-Exposition eine deutlich stärkere Restanfaßklebrigkeit vorhanden.

### Restmonomergehalt

Der nachgewiesene Restmonomergehalt liegt für Masse 1 bei < 0,25 Gew.%. Untersucht wurden vorzugsweise dicke Massenschichten > 500 µm, wie sie beispielsweise durch Hotmelt-Prozesse zu erhalten sind. Damit liegt der Gehalt an gesundheitsschädlichen Restmonomeren weit unter dem Gehalt, den UV-Acrylatpolymerisate typischerweise besitzen.

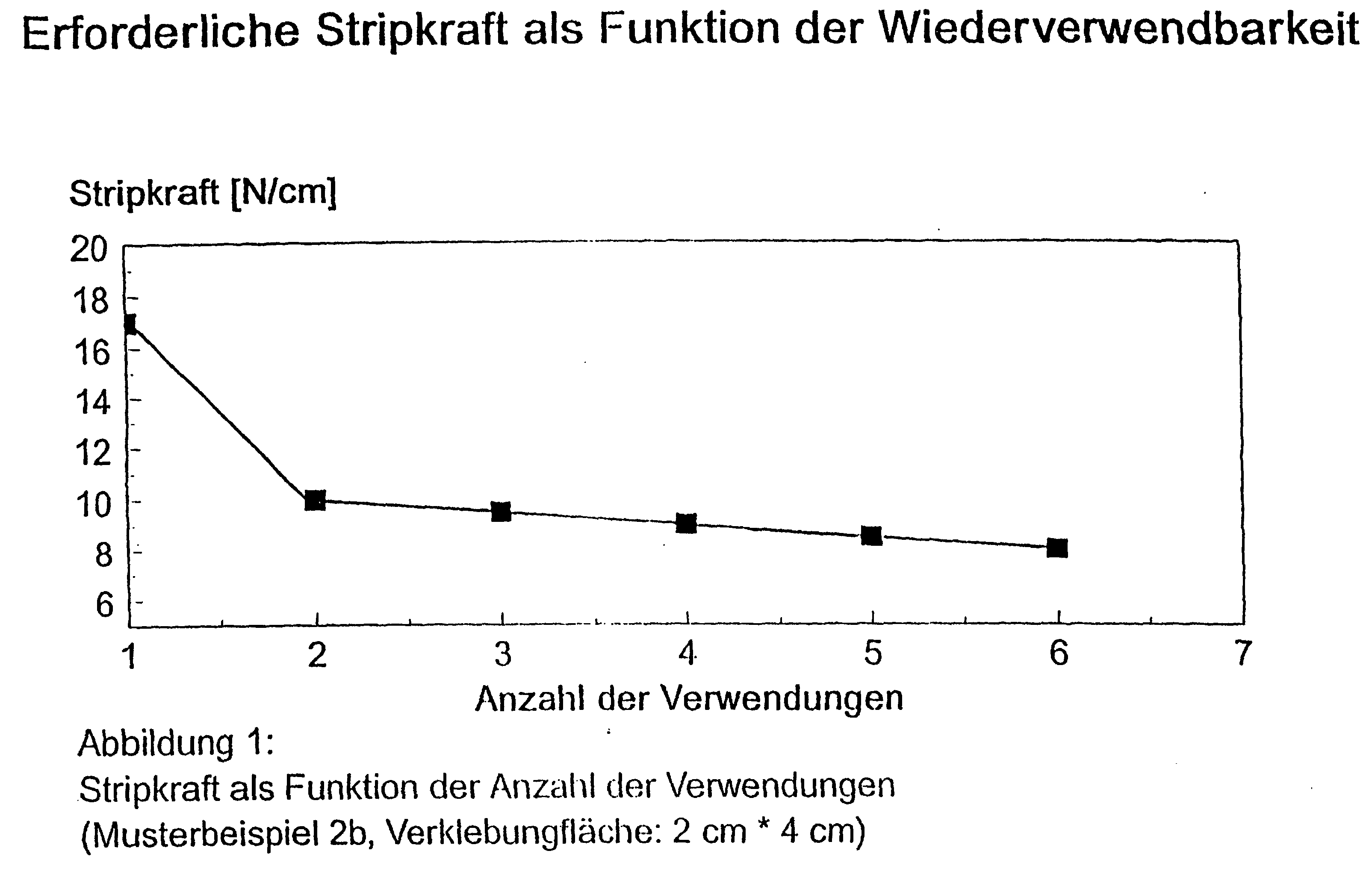

### Lichtdurchlässigkeit

Produkte, die sich aus den beschriebenen Trägermaterialien und Acrylatcopolymerisaten als Haftklebeschicht zusammensetzen, lassen sich als wasserklare, transparente Systeme realisieren. In harzfreien Systemen konnten keine spezifischen Absorptionsbereiche nachgewiesen werden. Systeme mit ungesättigten Harzen, wie z. B. in DE 33 31 016 C 2 beschrieben, weisen üblicherweise deutlich sichtbare Verfärbungen auf.

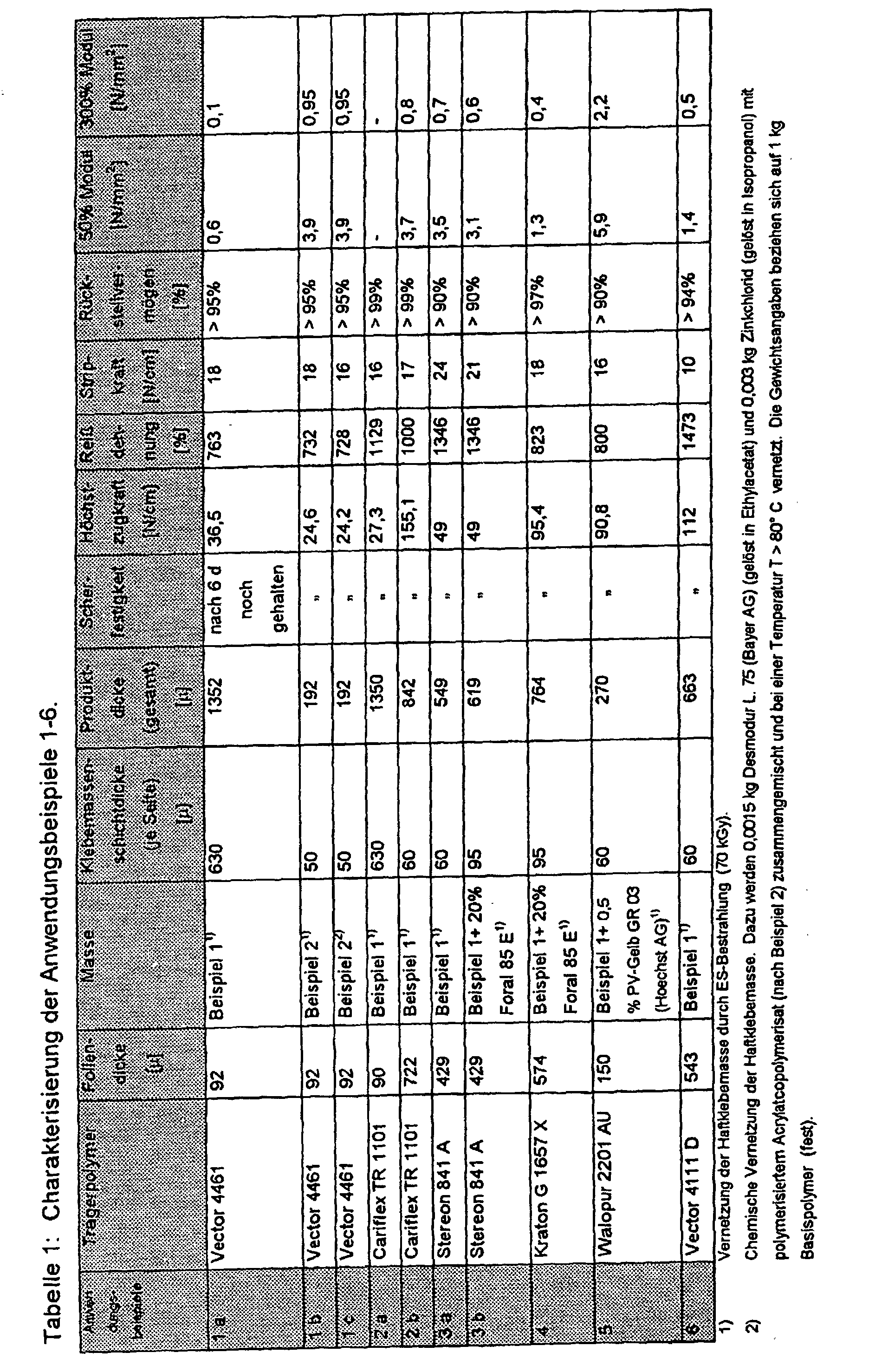

## Patentansprüche

1. Mehrfache Verwendung eines Klebfolien-Laminats für Verklebungen, die durch Ziehen an dem Laminat in Richtung der Verklebungsebene rückstandsfrei wieder lösbar sind, wobei als Laminat ein solches aus
a) einem elastischen Träger mit einem Rückstellungsvermögen von mindestens 50%
b) mindestens einseitig beschichtet mit einem Lösungsmittel- oder Hotmeltacrylat-Haftkleber-oder Dispersionsacrylat-Haftkleber.
eingesetzt wird.

2. Verwendung eines Laminats nach Anspruch 1, worin der Acrylat-Haftkleber ein gleichmäßiges Vernetzungsprofil hat.

3. Verwendung eines Laminats nach Anspruch 1, worin der Träger beiderseits mit dem Acrylat-Haftkleber beschichtet ist.

4. Verwendung eines Laminats nach Anspruch 1, worin der Träger mittels physikalischer und/oder chemischer Vorbehandlung haftverbessernd ausgerüstet ist.

5. Verwendung eines Laminats nach Anspruch 1, worin der Träger ein Rückstellungsvermögen von mindestens 80% hat.

6. Verwendung eines Laminats nach Anspruch 1, worin der Träger als Elastomer, vorliegt.

7. Verwendung eines Laminats nach Anspruch 1, worin der Acrylat-Haftkleber ein solcher auf Basis eines Acrylat-Copolymerisats ist, der in Form eines Compounds mit Harzen, verschiedenen Acrylat-Copolymerisaten, weiteren polymeren Abmischkomponenten und/oder Additive vorliegt.

8. Verwendung eines Laminats nach Anspruch 7, worin das Acrylat-Copolymerisat ein solches aus Acrylsäureestern und Acrylsäure ist.

9. Verwendung eines Laminats nach Anspruch 1, worin der Träger eine Dicke von 50-1000 µm und der Haftkleber auf einer oder beiden Seiten je eine Dicke von 25-800 µm hat, wobei das Klebfolien-Laminat insgesamt eine Dicke von 75-2600 µm hat.

10. Verwendung eines Laminats nach Anspruch 1, worin das Klebfolien-Lamiat eingefärbt, pigmentiert, gefüllt oder wasserklar/transparent ist.

11. Klebfolien-Laminat nach einem der Ansprüche 1-10.

## Claims

1. Repeated use of an adhesive-film laminate for bonds which can be redetached without residue by pulling on the laminate in the direction of the bond plane, the laminate employed comprising
a) an elastic support with a resilience of at least 50%
b) coated on at least one side with a solvent or hot-melt pressure-sensitive acrylate adhesive or dispersion pressure-sensitive acrylate adhesive.

2. Use of a laminate according to Claim 1, wherein the pressure-sensitive acrylate adhesive has a uniform crosslinking profile.

3. Use of a laminate according to Claim 1, wherein the support is coated on both sides with the pressure-sensitive acrylate adhesive.

4. Use of a laminate according to Claim 1, wherein the support is given an adhesion-promoting finish by means of physical and/or chemical pretreatment.

5. Use of a laminate according to Claim 1, wherein the support has a resilience of at least 80%.

6. Use of a laminate according to Claim 1, wherein the support is present as an elastomer.

7. Use of a laminate according to Claim 1, wherein the pressure-sensitive acrylate adhesive is based on an acrylate copolymer which is present in the form of a compound with resins, various acrylate copolymers, further polymeric blend components and/or additives.

8. Use of a laminate according to Claim 7, wherein the acrylate copolymer comprises acrylic esters and acrylic acid.

9. Use of a laminate according to Claim 1, wherein the support has a thickness of 50-1000 µm and the pressure-sensitive adhesive on one or both sides has a thickness of in each case 25-800 µm, the adhesive-film laminate having an overall thickness of 75-2600 µm.

10. Use of a laminate according to Claim 1, wherein the adhesive-film laminate is dyed, pigmented, filled or water-clear/transparent.

11. Adhesive-film laminate according to one of Claims 1-10.

## Revendications

1. Utilisation multiple d'un stratifié de pellicule adhésive pour des collages qui peuvent être détachés de nouveau sans laisser de résidus, par tirage sur le stratifié dans le sens du plan de collage, avec utilisation en tant que stratifié d'un stratifié constitué
a) d'un support élastique ayant un pouvoir de rappel d'au moins 50 %
b) revêtu au moins d'un côté d'un autoadhésif acrylate contenant un solvant ou thermofusible ou d'un autoadhésif acrylate en dispersion.

2. Utilisation d'un stratifié selon la revendication 1, dans lequel l'autoadhésif acrylate a un profil de réticulation uniforme.

3. Utilisation d'un stratifié selon la revendication 1, dans laquelle le support est revêtu des deux côté avec l'autoadhésif acrylate.

4. Utilisation d'un stratifié selon la revendication 1, dans laquelle le support est traité, pour l'amélioration du collage, par un prétraitement physique et/ou chimique.

5. Utilisation d'un stratifié selon la revendication 1, dans laquelle le support a un pouvoir de rappel d'au moins 80 %.

6. Utilisation d'un stratifié selon la revendication 1, dans laquelle le support est présent sous forme d'élastomère.

7. Utilisation d'un stratifié selon la revendication 1, dans laquelle l'autoadhésif acrylate est un autoadhésif à base d'un copolymère d'acrylate, qui se trouve sous forme d'une combinaison avec des résines, divers copolymères d'acrylate, d'autre composants polymères de mélange et/ou des additifs.

8. Utilisation d'un stratifié selon la revendication 7, dans laquelle le copolymère d'acrylate est un copolymère à base d'acide acrylique et d'esters d'acide acrylique.

9. Utilisation d'un stratifié selon la revendication 1, dans laquelle le support a une épaisseur de 50 - 1 000 µm et l'autoadhésif a sur une face ou sur les deux une épaisseur de 25-800 µm, le stratifié de pellicule adhésive ayant au total une épaisseur de 75 - 2 600 µm.

10. Utilisation d'un stratifié selon la revendication 1, dans laquelle le stratifié de pellicule adhésive est coloré, pigmenté, chargé ou transparent/ transparent comme de l'eau.

11. Stratifié de pellicule adhésive selon l'une quelconque des revendications 1 à 10.
